# EUROPEAN PATENT APPLICATION

(11) **EP 4 729 215 A1**
(43) Date of publication of application: **22.04.2026**
(21) Application number: 24315483.8
(22) Date of filing: 18.10.2024
(51) Int. Cl.: B23B 27/00, B23B 29/02, B23C 5/00

(54) **A CUTTING TOOL AND A METHOD FOR ASSEMBLING SUCH A CUTTING TOOL**

(71) Applicant: Seco Tools Tooling Systems, 67330 Bouxwiller (FR)
(72) Inventor: ALIAKBARI, Alireza, 67330 BOUXWILLER (FR); GROLL, Yannick, 67330 BOUXWILLER (FR); KRUMHORN, Pascal, 67330 BOUXWILLER (FR)
(74) Representative: Sandvik

(57) **Abstract**

The invention is related to a cutting tool (100) comprising a toolholder (110) and a cutting head (150), wherein the toolholder (110) comprises an internal cavity (118), and wherein the toolholder (110) further comprises a tunable vibration damping assembly (130) arranged in the internal cavity (118), wherein the tunable vibration damping assembly (130) has a front damper end (132) and a rear damper end (134), wherein the cutting head (150) comprises a rear head end (162), wherein the rear head end (162) is connected to the toolholder (110), and wherein the tunable vibration damping assembly (130) is separated from the cutting head (150) via an air gap (160) extending from the rear head end (162) to the front damper end (132). The invention also relates to a method (200) for assembling such a cutting tool (100).

## Description

### TECHNICAL FIELD

The present invention relates to a cutting tool and to a method for assembling such a cutting tool.

### BACKGROUND

In the cutting industry, various cutting tools are used for machining a workpiece, such as for example rotating or non-rotating cutting tools. Such cutting tools typically comprise an elongate body with a cutting head at a front end, and, at a rear end, a shank for connecting the cutting tool to a machine tool.

When cutting tools are operated, the cutting tool is subjected to cutting forces that may vary in intensity and/or direction. This may lead to undesired vibrations or oscillations in the cutting tool, which in turn may cause insufficient surface finish on the machined workpiece, or damage the cutting tool or the workpiece.

In order to solve this problem, it is common to provide cutting tools with tunable vibration damping assemblies, which are configurated to reduce the vibrations at certain frequencies. Such a cutting tool is disclosed in e.g. WO 2023/031189 A1.

A problem with such known cutting tools is that the tuning of the vibration damping assembly is time-consuming.

### SUMMARY OF THE INVENTION

It is an object of the present invention to overcome, or at least partly overcome, said problem by introducing a cutting tool and a method for assembling such a cutting tool.

The object of the present invention is achieved by means of a cutting tool comprising:
- a toolholder; and
- a cutting head, wherein

the toolholder comprises a holder body, wherein the holder body has a first holder body end, a second holder body end, and a longitudinal axis A extending from the first holder body end to the second holder body end, wherein
the holder body is provided with an internal cavity which extends along the longitudinal axis A, wherein
the toolholder further comprises a tunable vibration damping assembly, wherein the tunable vibration damping assembly is arranged in the internal cavity, wherein the tunable vibration damping assembly has a front damper end and a rear damper end, and a longitudinal damper axis B extending from the front damper end to the rear damper end, wherein the longitudinal damper axis B coincides with the longitudinal axis A, wherein
the cutting head comprises a rear head end, wherein
the rear head end is connected to the holder body at the first holder body end, wherein
the tunable vibration damping assembly is separated from the cutting head via an air gap extending from the rear head end to the front damper end in the direction of the longitudinal axis A.

By having the tunable vibration damping assembly separated from the cutting head via an air gap, it is possible to tune the vibration damping assembly inside the cavity. By performing the tuning process inside the cavity, the tuning process can be speed up and allows for small adjustments of the damping characteristics. Additionally, the air gap provides a barrier for heat transfer and keeps the vibration damping assembly at lower temperatures, which reduces the risk of the tuning parameters to alter during operation of the cutting tool.

The cutting tool is a cutting tool for performing a cutting operation, such as turning, milling, drilling, boring or reaming. According to an embodiment, the cutting tool is a metal cutting tool.

According to an embodiment, the cutting head comprises a cutting edge which may be integral with the cutting head or located on a replaceable cutting element mounted in a cutting element interface in the cutting head. According to an embodiment, the replaceable cutting element is a cutting insert. According to an embodiment, the cutting insert is an indexable cutting insert. According to an embodiment, the replaceable cutting element is a cubic boron nitride (CBN) cutting element, a polycrystalline diamond (PCD) cutting element, a cemented carbide cutting element, a cermet cutting element, or a ceramic cutting element.

According to an embodiment, the internal cavity is delimited by an internal cavity surface, wherein the tunable vibration damping assembly is separated from the internal cavity surface.

By having the tunable vibration damping assembly separated from the internal cavity surface, the vibration damping assembly is less exposed to heat transfer from the holder body during operation of the cutting tool, which keeps the vibration damping assembly at lower temperatures.

According to an embodiment, the tunable vibration damping assembly is separated from the internal cavity surface by at least one O-ring arranged between the tunable vibration damping assembly and the internal cavity surface.

According to an embodiment, the tunable vibration damping assembly is secured in the internal cavity via at least one O-ring jammed between the tunable vibration damping assembly and the internal cavity surface.

According to an embodiment, the holder body comprises an interface at the first holder body end, which is the front end, for releasably connecting the cutting head to the toolholder. According to an embodiment, the interface is a female coupling interface configured to mate with a male coupling interface at the cutting head. In other embodiments, the cutting head is integral with the holder body.

According to an embodiment, the cutting head comprises a male coupling interface configured to mate with a female coupling interface at the first holder body end.

According to an embodiment, a shank for connecting the cutting tool to a machine tool is provided at the second holder body end, which is a rear end. Optionally, the shank is provided with a coupling, such as for example a Coromant Capto^{©} coupling.

According to an embodiment, the holder body comprises an internal cutting fluid channel extending from the second holder body end to the internal cavity.

According to an embodiment, the air gap extends a distance of 0.05-3 mm in the direction of the longitudinal axis A. Preferably, the air gap extends a distance of 0.1-1 mm in the direction of the longitudinal axis A.

By having the air gap extending a distance of 0.05-3 mm in the direction of the longitudinal axis A, even higher damping capabilities are achieved. Having the air gap being shorter than 0.05 mm results in a high heat transfer from the cutting head to the tunable vibration damping assembly, which increases the risk of the tuning parameters to alter during operation of the cutting tool. Having the air gap being higher than 3 mm places the tunable vibration damping assembly too far from the cutting head, which reduces the damping capabilities.

According to an embodiment, the tunable vibration damping assembly comprises:
- a rear cap;
- a rear elastic element;
- a mass;
- a front elastic element; and
- a front cap, wherein

the rear elastic element is securely clamped between the rear cap and the mass, and wherein the front elastic element is securely clamped between the front cap and the mass, wherein the front cap is arranged at the front damper end, and wherein the rear cap is arranged at the rear damper end.

With this arrangement of the tunable vibration damping assembly, the tuning process is facilitated since the vibration damping assembly can be tuned by rotating at least one of the front cap and the rear cap around the longitudinal damper axis B. This arrangement also facilitates the tuning of the vibration damping assembly inside the internal cavity.

Alternatively, the tunable vibration damping assembly does not comprise the rear cap. In this embodiment, the rear elastic element is instead securely clamped between the mass and an internal cavity surface.

According to an embodiment, at least one of the front cap and the rear cap is provided with an element configured to transform a rotational movement of the front and/or rear cap into an axial movement of the front and/or rear cap. According to an embodiment, such element is in the form of a threaded screw hole configured to mate with a threaded screw, wherein the advancement is managed by the thread pitches.

According to an embodiment, the mass comprises tungsten, tungsten carbide, tungsten alloy, cemented carbide, steel or steel alloy. The mass may have any suitable shape. The shape of the mass may be selected according to desired weight and/or inertia. According to an embodiment, the mass has only circular cross sections. Thereby, the mass has equal qualities in all directions perpendicular to the longitudinal damper axis. According to an embodiment, the mass is cylindrical, conical or spherical. According to an embodiment, the mass is solid or hollow.

According to an embodiment, the front cap and the rear cap comprise tungsten, tungsten carbide, tungsten alloy, cemented carbide, steel or steel alloy. I

According to an embodiment, the front elastic element and the rear elastic element comprise a polymer, such as for example nitril, silicon or polyethylene. Generally, an advantage with elastic polymer elements is that they work well for high amplitudes.

According to an embodiment, the rear elastic element and the front elastic element are O-rings.

According to an embodiment, the rear elastic element and the front elastic element have a polygonal cross-section.

According to an embodiment, the tunable vibration damping assembly comprises a damper channel extending from the rear damper end to the front damper end, and through the mass, wherein the damper channel is delimited by an internal channel surface.

By having a damper channel extending through the tunable vibration damping assembly, cutting fluid can be delivered to the cutting head through the vibration damping assembly, which reduces the heat load on the cutting tool during operation and thereby increase the lifetime of the cutting tool.

According to an embodiment, the damper channel has a longitudinal channel axis C, which coincides with the longitudinal axis A.

According to an embodiment, the toolholder further comprises a rod extending through the damper channel, wherein a damping fluid cavity is delimited by the rod and the internal channel surface, wherein a damping fluid is provided in the damping fluid cavity.

By having a damping fluid provided in the damping fluid cavity, the damping capabilities is further improved.

According to an embodiment, the damping fluid is a liquid. According to an embodiment, the damping fluid is an oil. Optionally, the oil has a viscosity of 200-1000 mm²/s.

According to an embodiment, the rod has a front rod end and a rear rod end, wherein the rod comprises a rod channel extending from the rear rod end to the front rod end.

By having a rod channel extending from the rear rod end to the front rod end, cutting fluid can be delivered to the cutting head through the tunable vibration damping assembly, which reduces the heat load on the cutting tool during operation and thereby increase the lifetime of the cutting tool. The cutting fluid flowing through the rod channel also contributes to keeping the temperature of the tunable vibration damping assembly steady during operation of the cutting tool. Thereby, the risk of the tuning parameters altering during operation of the cutting tool is reduced.

According to an embodiment, the rod channel is coaxial with the damper channel.

According to an embodiment, the front rod end comprises a threaded portion, which is configured to mate with a threaded hole in the front cap.

According to an embodiment, the rear rod end comprises a threaded portion, which is configured to mate with a threaded hole in the rear cap.

According to an embodiment, at least one of the front cap and the rear cap is provided with a damping fluid inlet, wherein the damping fluid inlet is arranged in fluid communication with the damping fluid cavity.

By having a damping fluid inlet arranged in.at least one of the front cap and the rear cap, the damping fluid can be provided in the damping fluid cavity subsequent to the tuning of the vibration damping assembly, which facilitates the tuning process.

According to an embodiment, the damping fluid inlet comprises a sealing element configured to prevent the damping fluid to leak from the damping fluid cavity.

By providing a sealing element at the damping fluid inlet, the damping fluid is maintained within the damping fluid cavity during operation of the cutting tool. According to an embodiment, the sealing element comprises a metallic ball and a screw.

According to an embodiment, at least one of the front cap and the rear cap is provided with an air outlet, wherein the air outlet is arranged in fluid communication with the damping fluid cavity.

By having an air outlet provided in at least one of the front cap and the rear cap, the risk of air bubbles getting trapped in the damping fluid cavity is reduced. If air bubbles are trapped in the damping fluid cavity, the damping fluid becomes pressurized, which has a negative impact on the damping characteristics.

According to an embodiment, the tunable vibration damping assembly comprises a central plane P arranged midway between the front damper end and the rear damper end, wherein the central plane is arranged perpendicular to the longitudinal damper axis B, wherein the tunable vibration damping assembly has mirror symmetry with respect to the central plane P.

By having a symmetrical vibration damping assembly, the assembling process of the cutting tool is facilitated.

The object of the present invention is further achieved by means of a method for assembling the cutting tool as described above, wherein the method comprises the steps of:
- arranging the tunable vibration damping assembly in the internal cavity;
- tuning the tunable vibration damping assembly inside the internal cavity; and
- connecting the rear head end to the holder body at the first holder body end.

By tuning the tunable vibration damping assembly inside the internal cavity, the tuning process can be speed up and allows for small adjustments of the damping characteristics.

According to an embodiment, the step of tuning the tunable vibration damping assembly inside the internal cavity comprises the step of:
- applying an axial pressure towards at least one of the front elastic element and the rear elastic element.

According to an embodiment, the step of applying an axial pressure towards at least one of the front elastic element and the rear elastic element comprises the step of:
- rotating at least one of the front cap and the rear cap around the longitudinal damper axis B.

According to an embodiment, the method further comprises the step of:
- filling the damping fluid cavity with a damping fluid, wherein the step of filling the damping fluid cavity with a damping fluid is performed subsequent to the step of tuning the tunable vibration damping assembly inside the internal cavity.

### BRIEF DESCRIPTION OF THE DRAWINGS

Figure 1 schematically illustrates a perspective view of a cutting tool according to an embodiment of the invention.
Figure 2 schematically illustrates a side view of the cutting tool illustrated in figure 1, which shows the toolholder in a schematic longitudinal section.
Figure 3 illustrates a flowchart of a method for assembling a cutting tool according to an embodiment of the invention.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

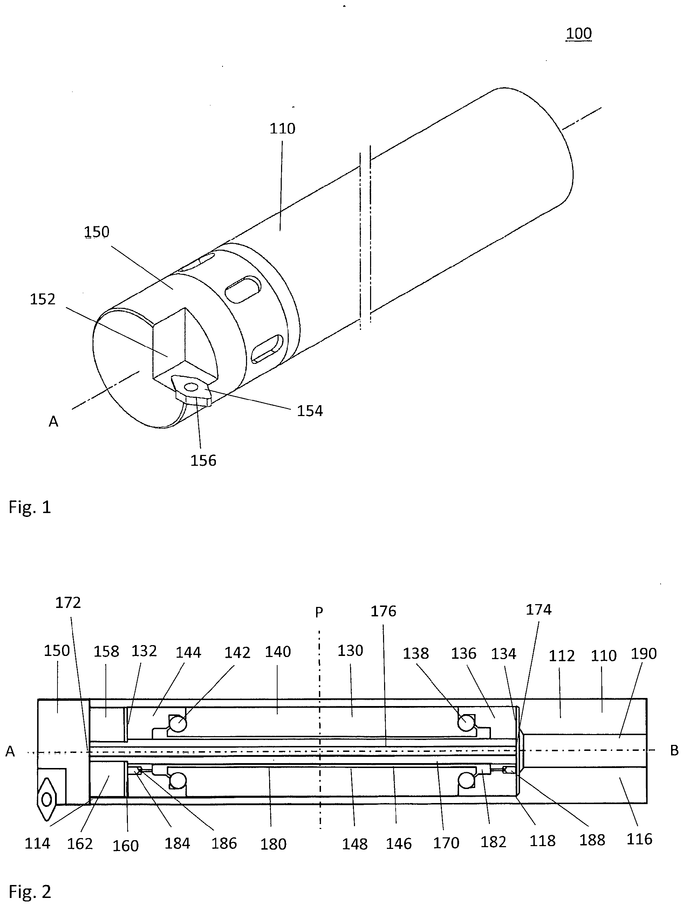

Figure 1 schematically illustrates a perspective view of a cutting tool (100), in form of a boring bar, according to an embodiment of the invention. The cutting tool (100) comprises a toolholder (110) and a cutting head (150). The cutting head (150) comprises an insert pocket (152) having a cutting insert (154) arranged therein. The cutting insert (154) comprises a cutting edge (156). The toolholder (110) has a longitudinal axis A.

Figure 2 schematically illustrates a side view of the cutting tool (100), which shows the toolholder (110) in a schematic longitudinal section. The toolholder (110) comprises a holder body (112), wherein the holder body (112) has a first holder body end (114), a second holder body end (116), and a longitudinal axis A extending from the first holder body end (114) to the second holder body end (116). The holder body (112) is provided with an internal cavity (118) which extends along the longitudinal axis A. The cutting head (150) comprises a male coupling interface (158) arranged at a rear head end (162), which mates with a female coupling interface at the first holder body end (114). The holder body (112) further comprises an internal cutting fluid channel (190) extending from the second holder body end (116) to the internal cavity (118). The toolholder (110) further comprises a tunable vibration damping assembly (130), wherein the tunable damping assembly (130) is arranged in the internal cavity (118). The tunable vibration damping assembly (130) has a front damper end (132) and a rear damper end (134), and a longitudinal damper axis B extending from the front damper end (132) to the rear damper end (134). The tunable vibration damping assembly (130) is separated from the cutting head (150) via an air gap (160) extending from the rear head end (162) to the front damper end (132) in the direction of the longitudinal axis A. The tunable vibration damping assembly (130) comprises a rear cap (136), a rear elastic element (138) in form of an O-ring, a mass (140), a front elastic element (142) in form of an O-ring, and a front cap (144). The rear elastic element (138) is securely clamped between the rear cap (136) and the mass (140), and the front elastic element (142) is securely clamped between the front cap (144) and the mass (140). The front cap (144) is arranged at the front damper end (132), and the rear cap (136) is arranged at the rear damper end (134). The tunable vibration damping assembly (130) comprises a damper channel (146) extending from the rear damper end (134) to the front damper end (132), and through the mass. The damper channel (146) is delimited by an internal channel surface (148). The toolholder (110) further comprises a rod (170) extending through the damper channel (146), wherein a damping fluid cavity (180) is delimited by the rod (170) and the internal channel surface (148), and wherein a damping fluid (182) is provided in the damping fluid cavity (180). The rod (170) has a front rod end (172) and a rear rod end (174), and wherein the rod (170) comprises a rod channel (176) extending from the rear rod end (174) to the front rod end (172). The front cap (144) is provided with a damping fluid inlet (184) arranged in fluid communication with the damping fluid cavity (180). The damping fluid inlet (184) comprises a sealing element (186), in form of a metallic ball and a screw, configured to prevent the damping fluid (182) to leak from the damping fluid cavity (180). The rear cap (136) is provided with an air outlet (188) arranged in fluid communication with the damping fluid cavity (180). The tunable vibration damping assembly (130) comprises a central plane P arranged midway between the front damper end (132) and the rear damper end (134), and perpendicular to the longitudinal damper axis B. The tunable vibration damping assembly (130) has mirror symmetry with respect to the central plane P.

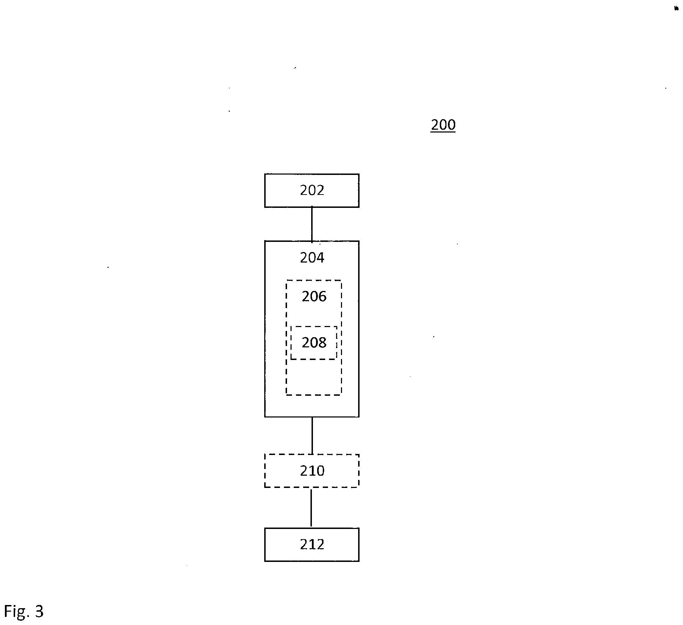

Figure 3 illustrates a flowchart of a method (200) for assembling the cutting tool (100). The method (200) comprises the steps of:
- arranging (202) the tunable vibration damping assembly (130) in the internal cavity (118);
- tuning (204) the tunable vibration damping assembly (130) inside the internal cavity (118);
- filling (210) the damping fluid cavity (180) with a damping fluid (182), wherein the step of filling (210) the damping fluid cavity (180) with a damping fluid (182) is performed subsequent to the step of tuning (204) the tunable vibration damping assembly (130) inside the internal cavity (118); and
- connecting (212) the rear head end (162) to the holder body (112) at the first holder body end (114).

The step of tuning (204) the tunable vibration damping assembly (130) inside the internal cavity (118) comprises the step of:
- applying (206) an axial pressure towards at least one of the front elastic element (142) and the rear elastic element (138).

The step of applying (206) an axial pressure towards at least one of the front elastic element (142) and the rear elastic element (138) comprises the step of:
- rotating (208) at least one of the front cap (144) and the rear cap (136) around the longitudinal damper axis B.

Figure 3 illustrates an example of method steps. The method (200) may comprise additional steps.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each, and every problem sought to be solved by the presently described concept, for it to be encompassed hereby. In the exemplary figures, a broken line generally signifies that the feature within the broken line is optional.

## Claims

1. A cutting tool (100) comprising:
- a toolholder (110); and
- a cutting head (150), wherein
the toolholder (110) comprises a holder body (112), wherein the holder body (112) has a first holder body end (114), a second holder body end (116), and a longitudinal axis A extending from the first holder body end (114) to the second holder body end (116), wherein
the holder body (112) is provided with an internal cavity (118) which extends along the longitudinal axis A, wherein
the toolholder (110) further comprises a tunable vibration damping assembly (130), wherein the tunable vibration damping assembly (130) is arranged in the internal cavity (118), wherein the tunable vibration damping assembly (130) has a front damper end (132) and a rear damper end (134), and a longitudinal damper axis B extending from the front damper end (132) to the rear damper end (134), wherein the longitudinal damper axis B coincides with the longitudinal axis A, wherein
the cutting head (150) comprises a rear head end (162), wherein
the rear head end (162) is connected to the holder body (112) at the first holder body end (114),
**characterized in that**
the tunable vibration damping assembly (130) is separated from the cutting head (150) via an air gap (160) extending from the rear head end (162) to the front damper end (132) in the direction of the longitudinal axis A.

2. The cutting tool (100) according to claim 1, wherein the air gap (160) extends a distance of 0.05-3 mm in the direction of the longitudinal axis A.

3. The cutting tool (100) according to claim 1 or 2, wherein the tunable vibration damping assembly (130) comprises:
- a rear cap (136);
- a rear elastic element (138);
- a mass (140);
- a front elastic element (142); and
- a front cap (144), wherein
the rear elastic element (138) is securely clamped between the rear cap (136) and the mass (140), and wherein the front elastic element (142) is securely clamped between the front cap (144) and the mass (140), wherein the front cap (144) is arranged at the front damper end (132), and wherein the rear cap (136) is arranged at the rear damper end (134).

4. The cutting tool (100) according to claim 3, wherein the rear elastic element (138) and the front elastic element (142) are O-rings.

5. The cutting tool (100) according to any of claims 3 or 4, wherein the tunable vibration damping assembly (130) comprises a damper channel (146) extending from the rear damper end (134) to the front damper end (132), and through the mass (140), wherein the damper channel (146) is delimited by an internal channel surface (148).

6. The cutting tool (100) according to claim 5, wherein the toolholder (110) further comprises a rod (170) extending through the damper channel (146), wherein a damping fluid cavity (180) is delimited by the rod (170) and the internal channel surface (148), wherein a damping fluid (182) is provided in the damping fluid cavity (180).

7. The cutting tool (100) according to claim 6, wherein the rod (170) has a front rod end (172) and a rear rod end (174), wherein the rod (170) comprises a rod channel (176) extending from the rear rod end (174) to the front rod end (172).

8. The cutting tool (100) according to claim 6 or 7, wherein at least one of the front cap (144) and the rear cap (136) is provided with a damping fluid inlet (184), wherein the damping fluid inlet (184) is arranged in fluid communication with the damping fluid cavity (180).

9. The cutting tool (100) according to claim 8, wherein the damping fluid inlet (184) comprises a sealing element (186) configured to prevent the damping fluid (182) to leak from the damping fluid cavity (180).

10. The cutting tool (100) according to any of claims 6-9, wherein at least one of the front cap (144) and the rear cap (136) is provided with an air outlet (188), wherein the air outlet (188) is arranged in fluid communication with the damping fluid cavity (180).

11. The cutting tool (100) according to any of the preceding claims, wherein the tunable vibration damping assembly (130) comprises a central plane P arranged midway between the front damper end (132) and the rear damper end (134), wherein the central plane P is arranged perpendicular to the longitudinal damper axis B, wherein the tunable vibration damping assembly (130) has mirror symmetry with respect to the central plane P.

12. A method (200) for assembling the cutting tool (100) according to any of claims 1-11, wherein the method (200) comprises the steps of:
- arranging (202) the tunable vibration damping assembly (130) in the internal cavity (118);
- tuning (204) the tunable vibration damping assembly (130) inside the internal cavity (118); and
- connecting (212) the rear head end (162) to the holder body (112) at the first holder body end (114).

13. The method (200) according to claim 12, wherein the step of tuning (204) the tunable vibration damping assembly (130) inside the internal cavity (118) comprises the step of:
- applying (206) an axial pressure towards at least one of the front elastic element (142) and the rear elastic element (138).

14. The method (200) according to claim 13, wherein the step of applying (206) an axial pressure towards at least one of the front elastic element (142) and the rear elastic element (138) comprises the step of:
- rotating (208) at least one of the front cap (144) and the rear cap (136) around the longitudinal damper axis B.

15. The method (200) according to any of claims 12-14, wherein the method (200) further comprises the step of:
- filling (210) the damping fluid cavity (180) with a damping fluid (182), wherein the step of filling (210) the damping fluid cavity (180) with a damping fluid (182) is performed subsequent to the step of tuning (204) the tunable vibration damping assembly (130) inside the internal cavity (118).
